# EUROPEAN PATENT SPECIFICATION

(11) **EP 1 374 517 B1**
(45) Date of publication and mention of the grant of the patent: **02.03.2005**
(21) Application number: 02708490.4
(22) Date of filing: 21.03.2002
(51) Int. Cl.: H04L 27/36, H03F 1/32

(54) **CORRECTOR FOR NON-MONOTONIC CHARACTERISTICS OF A SATELLITE TRANSMISSION CHANNEL**
KORREKTOR FÜR NICHTMONOTONE EIGENSCHAFTEN EINES SATELLITENÜBERTRAGUNGSKANALS
CORRECTEUR POUR CARACTERISTIQUES NON MONOTONES D'UNE VOIE DE TRANSMISSION PAR SATELLITE

(30) Priority: 22.03.2001 GB 0107227
(43) Date of publication of application: 02.01.2004
(73) Proprietor: Tandberg Television, 1326 Lysaker (NO)
(72) Inventor: BEECH, Brian, Herbert, Bishopstoke, Hampshire SO50 6NR (GB); EDWARDS, David, G., Eastleigh, Hampshire SO50 4PE (GB); PERINPANAYAGAM, Ravin, San Diego, CA 92131-3668 (US)
(74) Representative: Molyneaux, Martyn William
(86) International application number: PCT/GB2002/001350
(87) International publication number: WO 2002/078208

(56) References cited:
- WO-A-00/25495
- US-A- 5 361 039

## Description

This invention relates to a corrector for non-monotonic characteristics of a satellite transmission channel.

In a digital data transmission channel link, particularly a satellite transmission channel link, it is known for modulation techniques to use symbols arranged as points in a particular constellation pattern to represent digital data. The constellation shows all possible combinations of complex (I and Q) samples of the data being transmitted and the constellation pattern is an overlay of all possible positions of each data sample at a particular point. Thus, for each symbol, we may have four sampling points. Typical techniques are those of phase shift keying (PSK) and quadrature amplitude modulation (QAM). Common techniques are quadrature phase shift keying (QPSK) which is used for digital satellite transmission for consumer TV applications, and 8 PSK which is used, for example, for satellite news gathering applications. It is a desire to utilise higher order modulation methods such as 16 PSK and 16 QAM to permit transmission at a higher bit rate so as to facilitate a greater number of channels to be carried within a predefined bandwidth of a particular transmission link.

As is well known, transmission of a modulated signal through a satellite transmission channel results in distortion of the signal. The distortion is due, at least in part, to non-linear effects upon a signal as it passes through the transmission link. The distortion, in terms of magnitude and/or phase, results in a change in location of the constellation points for any given modulation scheme and an increase in the order of modulation results in a decrease in the distance between constellation points, thereby leading to distortion having a greater effect. Such distortion has the disadvantage of producing errors in demodulation.

It is known to compensate for such non-linear distortion effects within transmission links by use of a pre-correction compensator. Signal pre-distortion performed at radio frequencies (RF), intermediate frequencies (IF) or base band frequencies is often carried out by application of an inverse function of the distortion to be expected of the signal in the transmission path. Such pre-distortion is disclosed in WO-A-95132561 and US-A-4992754. Such forms of pre-correction tend to generate out-of-band components which are passed through to amplifiers in the transmission channel. Where the amplifier has an input filter, as is common for amplifiers used in satellite transmission links, then these out-of-band components are usually filtered out prior to amplification. Thus, the input signal to the amplifier is not the entire signal. This means that pre-correction is not effective for correction of amplifiers contained within satellite transponders where the bandwidth of the incoming signal is high in relation to the bandwidth of the transponder. Further, for higher order modulation schemes, such a form of pre-correction requires very high clocking rates in order to generate the wide-band pre-distortion components.

The foregoing problems are partially mitigated by the apparatus disclosed in WO-A-0025495, which discloses an arrangement for pre-distorting a signal so as to offset later distortion of the signal during transmission across a satellite transmission link which contains root Nyquist bandpass filters in respective up and down links. The apparatus includes a plurality of identical pre-distorting stages each of which generates an approximation of the required pre-distortion. Each successive stage receives an approximation from the preceding stage so that errors in successive approximations converge towards zero with increase in the number of stages.

However, with a satellite employing a travelling wave tube (TWT) or some other form of high power amplifier which has a non-monotonic characteristic around the saturation point of the amplifier, difficulties arise. It is a normal requirement to operate satellite power amplifiers, which are peak power limited at, or very close to, the saturation point of the amplifier. This presents a difficulty for the pre-distorting stage providing correction because no correction signal can force the satellite power amplifier to generate more than its saturation power. Furthermore, constellation points near the saturation point of the amplifier cannot be properly corrected.

In practice, the lack of convergence of the corrector of the prior art caused by the extreme non-linearity around the saturation point of the high power amplifier causes failure of both amplitude and phase correction.

It is an object of this invention to provide a corrector in which convergence by correcting may be performed.

According to a first aspect of this invention there is provided a method of correcting for non-monotonic characteristics of a satellite transmission channel so as to reduce non-linear phase distortion in a channel containing root Nyquist filters at an input and an output of a satellite power amplifier, including the steps of providing a forward model configured to represent phase and magnitude distortion in said channel, normalising phase and magnitude graphical characteristics of said forward model to represent a saturation point of said power amplifier as unity, and providing a correction of said graphical characteristics, whereby said phase graphical characteristic is unmodified and said magnitude graphical characteristic is processed beyond unity to be a straight line projected to pass through zero and unity, and using the result of said processing in said corrector on an applied input signal.

Preferably, the method further includes the steps of providing a static pre-distorter which has an inverse function of phase and magnitude of said forward model, normalising phase and magnitude graphical characteristics of said static pre-distorter to represent a saturation point of said power amplifier as unity, and providing a correction of said static pre-distorter graphical characteristics, whereby said graphical characteristic of said static pre-distorter is processed beyond unity to be a constant phase and said magnitude graphical characteristic is processed beyond unity to be a straight line projected to pass through zero and unity, and using the result of said static pre-distorter processing in said static pre-distorter on an applied input signal.

Conveniently, said processing of said forward model and said static pre-distorter graphical characteristic each include transforming said corrected graphical characteristics to look-up tables representative of applied instantaneous input signal level, phase and output signal level.

Advantageously, constellation points are arranged in a circular configuration to increase the Euclidian distance between points, and mapping said configuration in a look-up table.

According to a second aspect of this invention there is provided an apparatus for correcting non-monotonic characteristics of a satellite transmission channel so as to reduce non-linear phase distortion in a channel containing root Nyquist filters at an input and an output of a satellite power amplifier, said corrector including a forward model configured to represent phase and magnitude distortion in said channel, a normaliser for normalising phase and magnitude graphical characteristics of said forward model to represent a saturation point of said power amplifier as unity, and means for correcting said graphical characteristics, whereby said phase graphical characteristic is unmodified and said magnitude graphical characteristic is processed beyond unity to be a straight line projected through zero and unity.

Preferably, said apparatus further includes a static pre-distorter which is arranged to have an inverse function of phase and magnitude of said forward model, a further normaliser for normalising phase and magnitude characteristics of said static pre-distorter to represent a saturation point of said power amplifier as unity, a further corrector for correcting said static pre-distorter graphical characteristics whereby said phase graphical characteristic of said static pre-distorter is processed beyond unity to be a constant phase, and said magnitude graphical characteristic of said pre-distorter is processed beyond unity to be a straight line projected to pass through zero and unity.

The invention will now be described, by way of example, with reference to the accompanying drawings in which:-
Figure 1 shows, in block schematic form, a satellite transmission apparatus embodying this invention,
Figure 2 shows, in block schematic form, a corrector for reducing signal channel distortion in which this invention is used,
Figures 3(a) - 6(b) show normalised graphical characteristics of the satellite amplifier for the forward model and the initial approximator used in this invention,
Figure 7 shows look-up tables derived from the graphical characteristics of Figures 3(b), 4(b), 5(b) and 6(b),
Figure 8 shows a flow diagram of one of the processors of this invention,
Figure 9 shows a constellation diagram of a prior art corrector using a novel circular constellation configuration, and
Figure 10 shows a constellation diagram of the points when the present invention is used and using a novel circular configuration.

In the Figures like reference numerals denote like parts.

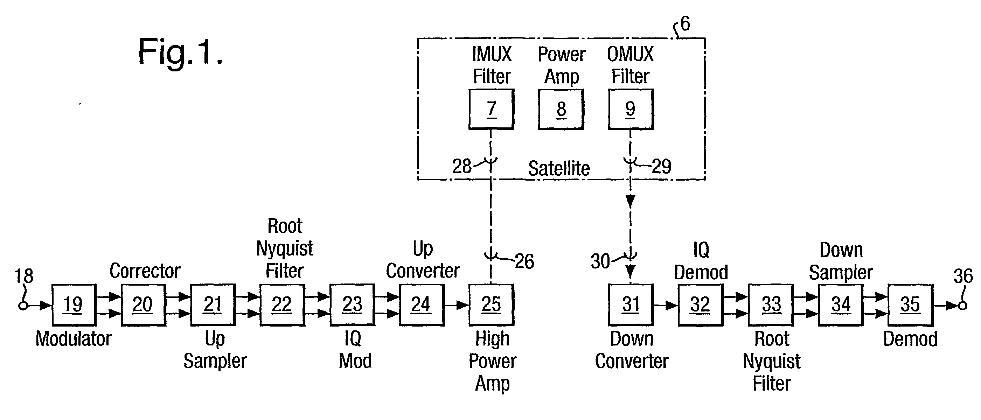

A channel link which, by way of example is shown as a satellite channel link, will now be described with reference to Figure 1. The transmitter side has a modulator 19 having an input 18 for receiving a stream of data bits and the modulator produces complex, I and Q, modulated outputs which are input to a pre-corrector 20 for reducing signal channel distortion. The corrector will be described in detail hereinafter. Output from the corrector is applied to an up sampler 21 which multiplies the input bit rate by a factor of 2 or more so as to provide a required output facilitating operation of a root Nyquist filter 22, which is usually a bandpass filter. It is usual to use Nyquist filtering within a transmission link in order to constrain the bandwidth of the transmitted signal. Output from the filter 22 is applied to an I, Q modulator 23 which provides an output to an up converter 24, output of which is amplified by high power amplifier 25 and then transmitted by, for example, a parabolic dish 26 to a satellite 6.

The satellite 6 has a receiving antenna 28 applying data to an input multiplexer (IMUX) filter 7, thence to a power amplifier 8, e.g. travelling wave tube (TWT) and an output multiplexer (OMUX) filter 9. Output from the OMUX filter is applied to a transmitting antenna 29 and data is received by, for example, a parabolic dish 30 at a receiver side.

An output R.F. signal from the dish 30 is applied to a down converter 31. Output from the down converter 31 is applied to an I, Q demodulator 32 which, in turn, provides output to a root Nyquist band pass filter 33. The output of the filter 33 is applied to down-sampler 34 and the I, Q down sampled outputs are demodulated by demodulator 35 to provide digital data transmitted by the symbols within the modulation scheme and provided at output terminal 36.

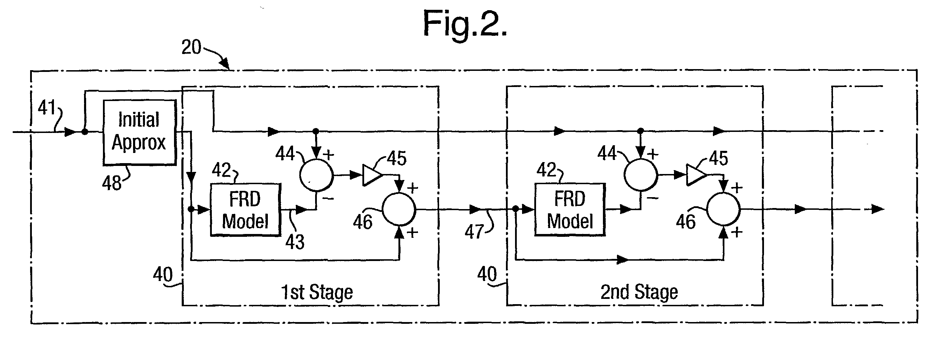

The pre-corrector 20 of this invention applies pre-distortion to the incoming signal to compensate for the magnitude and phase distortion subsequently applied to that signal during its passage through the transmission/reception channel and the pre-corrector is also preferably arranged to substantially correct for group delay distortions and distortions caused by truncating the frequency spectrum due to filtering. The pre-corrector 20 is shown in greater detail with reference to Figure 2.

Referring to Figure 2, input signal Vi on line 41, although shown as a single signal input line, is a complex signal representative of magnitude and phase and, similarly, output from the apparatus shown in Figure 2 is also a complex, I, Q signal. It will be understood by those skilled in the art that the inputs and outputs may be Cartesian or in polar form.

The input signal Vi is applied to an initial approximator 48 in input line 41 which is arranged to provide an output which is approximately the inverse of the distorting function of a forward model 42. For pre-distortion of an amplifier such as a TWT or solid state power amplifier, the initial approximator 48 may be a function which bases the constellation points in the correct place for pre-distortion but which does not dynamically change their position from symbol to symbol. Such an initial approximator is known in the art as a static pre-distorter. Such a static pre-distorter may comprise equal and opposite pre-distorters for distortion in the channel caused by non-linearity and group delay. The initial approximator disclosed in WO-A-0025495 produces an approximation of the non-linear distortion within the satellite. For combined non-linear and group delay correction, the approximator 48 may be a known non-linear corrector cascaded with a conventional group delay corrector.

Output from approximator 48 is applied to an input of the forward model 42 which is a pre-calculated forward model representative of the satellite transmission/ reception channel from the input of the up sampler 21 to the output of the down sampler 34. It will be understood that the forward model is based upon the linear and non-linear transfer function f of the channel. Output 43 of the forward model is applied to one input of a subtractor 44, the other input of which is supplied from input line 41. The input to the subtractor 44 from line 41 is delayed by a delay (not shown) to provide delayed symbols representative of digital data for time = t(1) so as to align the data with the symbols at time = t(1) that are acted upon by the forward model 42. The subtractor 44 output, which is an error signal given by Vi-f(Vi), is applied to an amplifier 45 and thence to one input of an adder 46, the other input of adder 46 being derived from input line 41 which are delayed by a delay (not shown) representative of the delay through components 42, 44 and 45. The amplification A by amplifier 45 is chosen to achieve the highest convergence rate for a given forward model distorting function.

It will be realised by those skilled in the art that an output 47 of adder 46 provides an estimate of the required transmitted signal and concerns symbols representative of digital data for time = t(1), whereby a first stage of approximation of the input signal precorrected for channel distortion is provided which is given by A[Vi-f-(Vi)]+Vi. The initial approximator 48 thus forms a static pre-distorting section and the elements 42 - 46 form a first dynamic pre-distorting stage 40. Because the output 47 of the first, i.e. single stage is not mathematically the required corrected signal, i.e. A[Vi-f(Vi)]+Vi ≠ Vi, so further dynamic pre-distorting stages 40 are provided which are identical to the first stage 40 so as to provide cascaded, successive stages of pre-distortion, each approximating to the required pre-distortion necessary for correction of the signal at the output 36. It has been found by computer simulation that errors in successive approximations converge toward zero with increase in the number of stages. In the example shown, there are second and further successive, cascaded, stages. It has been found that in the prior art six dynamic pre-distorting stages of successive approximation provides a reasonable balance between convergence towards zero and hardware implementation of the corrector. By using a number of successive stages of approximation, the error converges to zero and the final output becomes the required transmitted signal.

During passage of symbols representative of digital data for time = t(1) through the second stage, the first stage will be supplied with symbols representative of digital data for time = t(1+n), where n represents the pipeline delay.

It is to be understood that the initial approximator 48 may not be used, in which event line 41 is connected directly to the forward model 42 so that the input signal Vi is applied directly to the forward model.

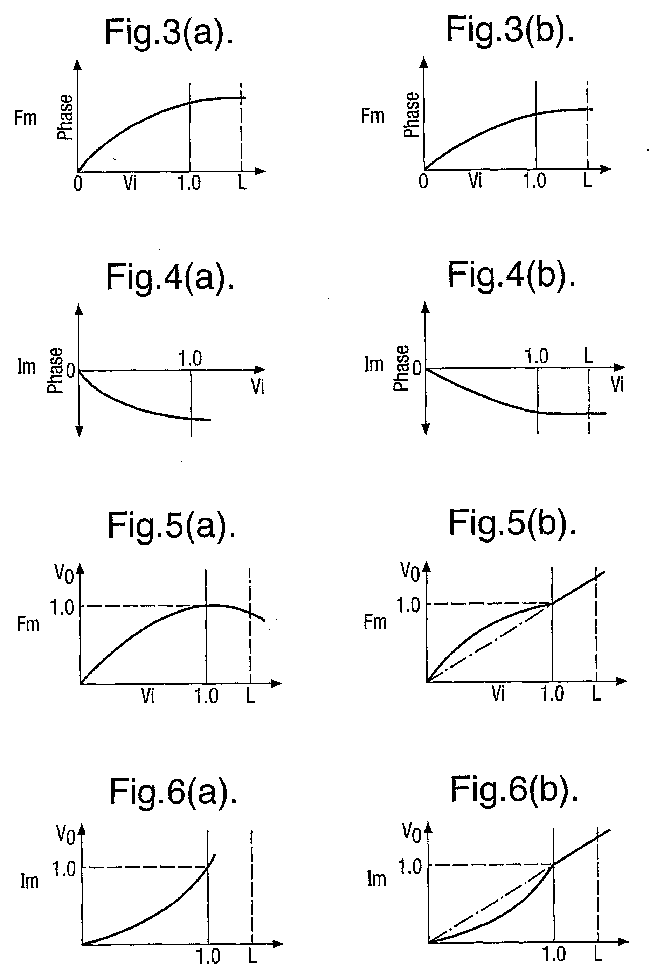

Reference will now be made to normalised phase and magnitude characteristics of the forward model 42 and the initial approximator 48 by referring to Figures 3(a) - 6 (b) .

The characteristics shown in the Figures 3(a) - 6(b) are normalised to represent the saturation point of the satellite power amplifier 8 as unity.

Figure 3(a) shows a phase characteristic for the forward model (Fm) 42 in which the graphical characteristic has an abscissa of Vi which is an instantaneous input signal level against an ordinate of phase.

Figure 5(a) shows a magnitude characteristic for the forward model 42 in which the abscissa is Vi and the ordinate is output voltage Vo of the power amplifier 8. The characteristics shown in Figures 3(a) and 5(a) are derived from measurements taken of the power amplifier 8.

For successful operation around the saturation point, i.e. unity, along the abscissa, it is important that the characteristic should extend to an input level limit L which is substantially greater than 1 (unity). For channels with a non-monotonic characteristic, such as a TWT, there is an anomaly in that when the data of the characteristic of Figures 3(a) and 5(a) is inverted to produce the phase characteristic of the initial approximator (Figure 4(a)) and the magnitude characteristic of the initial approximator (Im) (Figure 6(a)) there are two phase values and two output magnitude values for a given input voltage. Because the performance of the corrector shown in Figure 2 is extremely dependent on the data which is presented to the corrector above the saturation level input point (1.0 in the characteristics), so in accordance with this invention the input data of Figures 3(a), 4(a), 5(a) and 6(a) is converted by processing to overcome the anomaly. The data is generated in such a way as to allow conversions of the corrector around the saturation point so that phase correction can be achieved.

Referring to Figure 3(b), the graphical characteristic of Figure 3(a) is processed with a zero modifier, but the magnitude characteristic of Figure 5(a) is processed such that beyond unity the characteristic presents a straight line projected through zero and unity.

The phase characteristic of the initial approximator shown in Figure 4(a) is processed to provide a characteristic in which beyond unity the phase angle is maintaining constant. The magnitude characteristic of Figure 6(a) is processed in similar fashion to that of Figure 5(a) such that beyond unity the characteristic is a straight line projected to pass through zero and unity. By the expedients above-described, the anomaly of two phase values and two output magnitude values for a given input voltage is overcome and improved phase correction is achieved.

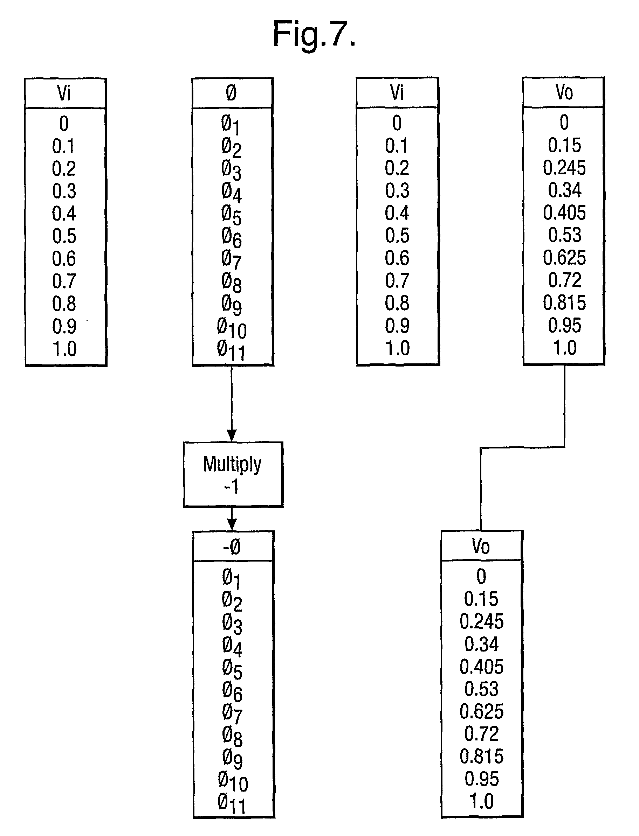

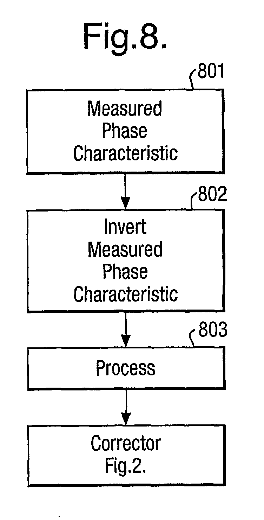

The characteristics shown in Figures 3(b), 4(b), 5(b) and 6(b) are represented in look-up tables. Exemplary look-up tables are shown in Figure 7 in which sample values for Vi and Vo are given, and the use of the look-up tables is shown by the flow chart of Figure 8. A similar flow chart (not shown) would be employed for determining magnitude processed characteristics. The measured phase characteristic is determined from an instantaneous input signal level Vi at step 801 from the characteristic shown in Figure 3(a) using the look-up tables. The measured characteristic is inverted at step 802 to provide a point on the characteristic of Figure 4(a) using the look-up tables which is then processed at step 803 to provide a point on the characteristic of Figure 4(b). The point from the characteristic of Figure 4(b) is then applied to the initial approximator. The measured characteristic at step 801 is applied without modification to the forward model 802. Using the look-up tables a value of Vo for a particular phase may be found.

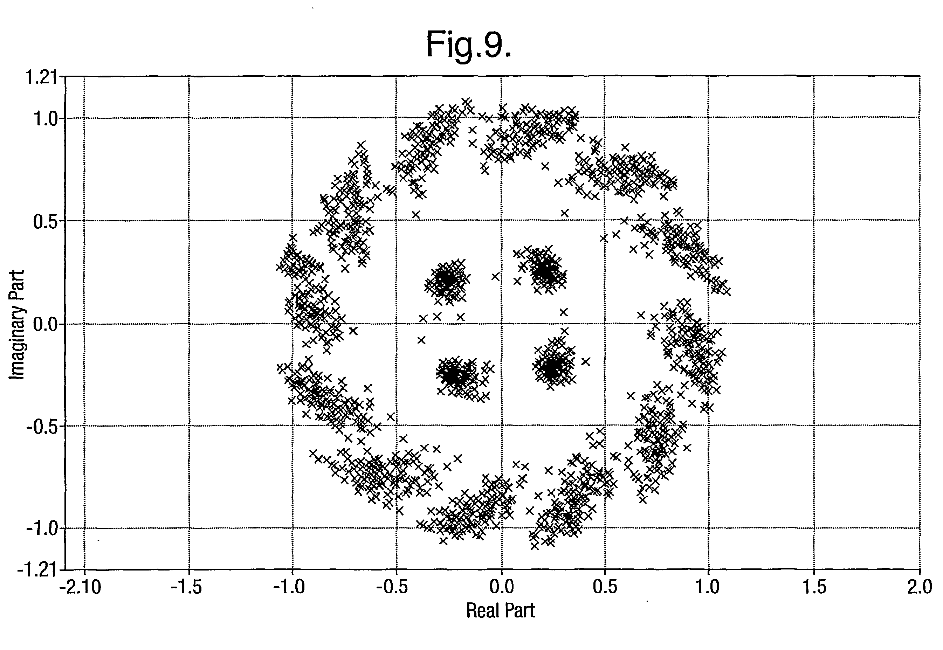

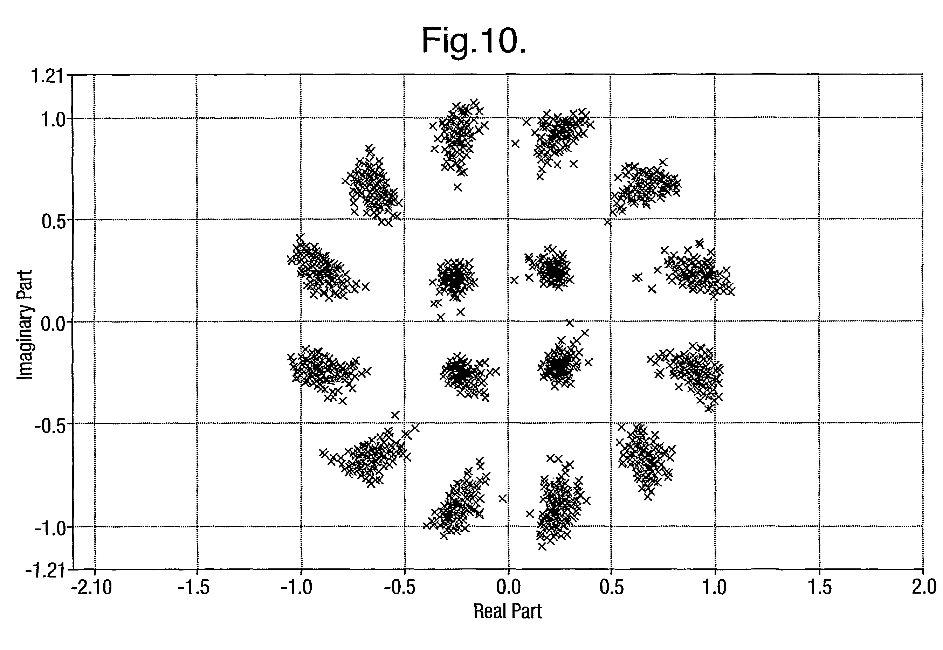

The constellation diagram of Figure 9 shows a prior art corrector without the processed characteristic correction of the present invention. From Figure 9 it will be noted that there is a reasonable degree of correction for the inner points, but not for the outer points. In distinction, as shown in the constellation diagram of Figure 10, not only is there reasonable coincidence of the inner points, but by virtue of the phase correction of the outer points so variance of these outer points is improved compared with the uncorrected constellation diagram of Figure 9. Additionally, correction of the inner points is also slightly improved. This arises from the fact that the corrector has memory and failed convergence on a constellation point has an effect on other constellation points which are close in time.

The constellation diagrams shown herein are arranged in a novel fashion to be circular rather than a usual rectilinear arrangement. Providing the constellation diagram to be circular has the advantage of increased Euclidian distance between points so that error in determining points, for example due to noise, is reduced. Such a circular constellation diagram is optimal for a satellite channel which is peak power limited. The points may be mapped into a circular configuration in a look-up table. Such a circular configuration is advantageous principally with the present invention, since if the present invention were not used, a circular constellation diagram would have a disadvantage that variation of the points will increase because they are near the saturation point of the satellite.

## Claims

1. A method of correcting for non-monotonic characteristics of a satellite transmission channel so as to reduce non-linear phase distortion in a channel containing root Nyquist filters (22; 33) at an input and an output of a satellite power amplifier, **characterised by** including the steps of providing a forward model (42) configured to represent phase and magnitude distortion in said channel, normalising phase and magnitude graphical characteristics of said forward model (42) to represent a saturation point of said power amplifier (25) as unity, and providing a correction of said graphical characteristics, whereby said phase graphical characteristic is unmodified and said magnitude graphical characteristic is processed beyond unity to be a straight line projected to pass through zero and unity, and using the result of said processing in said corrector (20), on an applied input signal (Vᵢ).

2. A method as claimed in claim 1, wherein the method further includes the steps of providing a static pre-distorter (48), which has an inverse function of phase and magnitude of said forward model (42), normalising phase and magnitude graphical characteristics of said static pre-distorter (48) to represent a saturation point of said power amplifier (25) as unity, and providing a correction of said static pre-distorter (48) graphical characteristics, whereby said graphical characteristic of said static pre-distorter (48), is processed beyond unity to be a constant phase and said magnitude graphical characteristic is processed beyond unity to be a straight line projected to pass through zero and unity, and using the result of said static pre-distorter (48) processing in said static pre-distorter (48) on an applied input signal (Vi).

3. A method as claimed in claim 2, wherein said processing of said forward model (42) and said static pre-distorter (48) graphical characteristic each include transforming said corrected graphical characteristics to look-up tables representative of applied instantaneous input signal level(Vi), phase and output signal level (Vo).

4. A method as claimed in any preceding claim, wherein constellation points are arranged in a circular configuration to increase the Euclidian distance between points, and mapping said configuration in a look-up table.

5. An apparatus (20) for correcting non-monotonic characteristics of a satellite transmission channel so as to reduce non-linear phase distortion in a channel containing root Nyquist filters (22; 33) at an input and an output of a satellite power amplifier, **characterised by** said corrector including a forward model (42) configured to represent phase and magnitude distortion in said channel, a normaliser for normalising phase and magnitude graphical characteristics of said forward model (42) to represent a saturation point of said power amplifier (25) as unity, and means for correcting said graphical characteristics, whereby said phase graphical characteristic is unmodified and said magnitude graphical characteristic is processed beyond unity to be a straight line projected through zero and unity.

6. An apparatus as claimed in claim 5, wherein said apparatus further includes a static pre-distorter (48) which is arranged to have an inverse function of phase and magnitude of said forward model (42), a further normaliser for normalising phase and magnitude characteristics of said static pre-distorter (48) to represent a saturation point of said power amplifier (25) as unity, a further corrector for correcting said static pre-distorter (48) graphical characteristics whereby said phase graphical characteristic of said static pre-distorter (48) is processed beyond unity to be a constant phase, and said magnitude graphical characteristic of said pre-distorter (48) is processed beyond unity to be a straight line projected to pass through zero and unity.

## Patentansprüche

1. Verfahren zur Korrektur ungleichförmiger Kenngrößen eines Satellitenübertragungskanals zur Reduzierung der nichtlinearen Phasenverzerrung in einem Kanal, der Wurzel-Nyquist-Filter (22; 33) an einem Eingang und einem Ausgang eines Satelliten-Leistungsverstärker aufweist, **dadurch gekennzeichnet, dass** das Verfahren die folgenden Schritte umfasst: Vorsehen eines Vorwärtsmodells (42), das so konfiguriert ist, dass es die Phasen- und Größenverstärkung in dem genannten Kanal darstellt; Normalisieren der grafischen Phasen- und Größen-Kenngrößen des genannten Vorwärtsmodells (42), um einen Sättigungspunkt des genannten Leistungsverstärkers (25) als Eins darzustellen; und Vorsehen einer Korrektur der genannten grafischen Kenngrößen, wobei die genannte grafische Phasenkenngröße unmodifiziert ist, und wobei die genannte grafische Größenkenngröße über Eins hinaus als eine gerade Linie verarbeitet wird, die so projiziert wird, dass sie durch Null und Eins verläuft, und unter Verwendung des Ergebnisses der genannten Verarbeitung in der genannten Korrektureinrichtung (20) an einem zugeführten Eingangssignal (Vᵢ).

2. Verfahren nach Anspruch 1, wobei das Verfahren ferner die folgenden Schritte umfasst: Vorsehen eines statischen Vorverzerrers (48), der eine Umkehrfunktion der Phase und der Größe des genannten Vorwärtsmodells (42) aufweist; Normalisieren der grafischen Phasen- und Größenkenngrößen des genannten statischen Vorverzerrers (48) zur Darstellung eines Sättigungspunktes des genannten Leistungsverstärkers (25) als Eins; und Vorsehen einer Korrektur der grafischen Kenngrößen des genannten statischen Vorverzerrers (48), wodurch die genannte grafische Kenngröße des genannten statischen Vorverzerrers (48) über die Eins hinaus als konstante Phase verarbeitet wird, und wobei die genannte grafische Größenkenngröße über Eins hinaus als gerade Linie verarbeitet wird, die so projiziert wird, dass sie durch Null und Eins verläuft; und Verwenden des Ergebnisses der genannten Verarbeitung des genannten statischen Vorverzerrers (48) in dem genannten statischen Vorverzerrer (48) an einem zugeführten Eingangssignal (Vᵢ).

3. Verfahren nach Anspruch 2, wobei die genannte Verarbeitung des genannten Vorwärtsmodells (42) und der genannten grafischen Kenngröße des statischen Vorverzerrers (48) jeweils das Transformieren der genannten korrigierten grafischen Kenngrößen in Verweistabellen aufweisen, welche den zugeführten momentanen Eingangssignalpegel (Vᵢ), den Phasenund Ausgangssignalpegel (Vₒ) darstellen.

4. Verfahren nach einem der vorstehenden Ansprüche, wobei Konstellationspunkte in einer kreisförmigen Konfiguration angeordnet sind, um den Euklidabstand zwischen Punkten zu erhöhen, und wobei die genannte Konfiguration in eine Verweistabelle abgebildet wird.

5. Vorrichtung (20) zur Korrektur ungleichförmiger Kenngrößen eines Satellitenübertragungskanals zur Reduzierung der nichtlinearen Phasenverzerrung in einem Kanal, der Wurzel-Nyquist-Filter (22; 33) an einem Eingang und einem Ausgang eines Satelliten-Leistungsverstärker aufweist, **dadurch gekennzeichnet, dass** die genannte Korrektureinrichtung ein Vorwärtsmodell (42) aufweist, das so konfiguriert ist, dass es die Phasen- und Größenverstärkung in dem genannten Kanal darstellt; eine Normalisierungseinrichtung zum Normalisieren der grafischen Phasen- und Größen-Kenngrößen des genannten Vorwärtsmodells (42), um einen Sättigungspunkt des genannten Leistungsverstärkers (25) als Eins darzustellen; und eine Einrichtung zur Korrektur der genannten grafischen Kenngrößen, wobei die genannte grafische Phasenkenngröße unmodifiziert ist, und wobei die genannte grafische Größenkenngröße über Eins hinaus als eine gerade Linie verarbeitet wird, die so projiziert wird, dass sie durch Null und Eins verläuft.

6. Vorrichtung nach Anspruch 5, wobei die genannte Vorrichtung ferner folgendes aufweist: einen statischen Vorverzerrer (48),so angeordnet ist, dass er eine Umkehrfunktion der Phase und der Größe des genannten Vorwärtsmodells (42) aufweist; eine weitere Normalisierungseinrichtung zur Normalisierung der grafischen Phasen- und Größenkenngrößen des genannten statischen Vorverzerrers (48) zur Darstellung eines Sättigungspunktes des genannten Leistungsverstärkers (25) als Eins; und eine weitere Korrektureinrichtung (26) zum Korrigieren der grafischen Kenngrößen des genannten statischen Vorverzerrers (48), wodurch die genannte grafische Kenngröße des genannten statischen Vorverzerrers (48) über die Eins hinaus als konstante Phase verarbeitet wird, und wobei die genannte grafische Größenkenngröße des genannten Vorverzerrers (48) über Eins hinaus als gerade Linie verarbeitet wird, die so projiziert wird, dass sie durch Null und Eins verläuft.

## Revendications

1. Procédé de correction des caractéristiques non monotones d'une voie de transmission par satellite afin de réduire la distorsion de phase non-linéaire dans une voie contenant des filtres Nyquist racines (22 ; 33) à une entrée et une sortie d'un amplificateur de puissance de satellite **caractérisé en ce qu'**il comprend les étapes consistant à fournir un modèle d'envoi (42) configuré pour représenter la distorsion de phase et de magnitude dans ladite voie, à normaliser les caractéristiques graphiques de phase et de magnitude dudit modèle d'envoi (42) pour représenter un point de saturation dudit amplificateur de puissance (25) comme unité, et à fournir une correction desdites caractéristiques graphiques, moyennant quoi ladite caractéristique graphique de phase reste non modifiée et ladite caractéristiques graphique de magnitude est traitée au-delà de l'unité pour être une ligne droite projetée pour passer par zéro et l'unité, et utilisant le résultat dudit traitement dans ledit correcteur (20) sur un signal d'entrée appliqué (Vi).

2. Procédé selon la revendication 1, dans lequel le procédé comprend en outre les étapes consistant à fournir un générateur de pré-distorsion statique (48) qui a une fonction inverse de phase et de magnitude dudit modèle d'envoi (42), à normaliser les caractéristiques graphiques de phase et de magnitude dudit générateur de pré-distorsion statique (48) pour représenter un point de saturation dudit amplificateur de puissance (25) comme unité, et à fournir une correction desdites caractéristiques graphiques dudit générateur de pré-distorsion statique (48), moyennant quoi lesdites caractéristiques graphiques dudit générateur de pré-distorsion statique (48) sont traitées au-delà de l'unité pour être une phase constante et ladite caractéristique graphique de magnitude est traitée au-delà de l'unité pour être une ligne droite projetée pour passer par zéro et l'unité, et utilisant le résultat dudit traitement du générateur de pré-distorsion statique (48) dans ledit générateur de pré-distorsion statique (48) sur un signal d'entrée appliqué (Vi).

3. Procédé selon la revendication 2, dans lequel ledit traitement dudit modèle d'envoi (42) et ladite caractéristique graphique du générateur de pré-distorsion statique (48) comprennent chacun la transformation desdites caractéristiques graphiques corrigées en tables de recherche représentant le niveau de signal d'entrée instantané (Vi), la phase et le niveau de signal de sortie (Vo).

4. Procédé selon l'une quelconque des revendications précédentes, dans lequel les points de constellation sont agencés dans une configuration circulaire pour augmenter la distance euclidienne entre les points, et mapper ladite configuration dans une table de recherche.

5. Appareil (20) pour corriger les caractéristiques non monotones d'une voie de transmission par satellite afin de réduire la distorsion de phase non-linéaire dans une voie contenant des filtres Nyquist racines (22 ; 33) à une entrée et une sorti d'un amplificateur de puissance de satellite, **caractérisé en ce que** ledit correcteur comprend un modèle d'envoi (42) configuré pour représenter la distorsion de phase et de magnitude dans ladite voie, un normalisateur pour normaliser les caractéristiques graphiques de phase et de magnitude dudit modèle d'envoi (42) pour représenter un point de saturation dudit amplificateur de puissance (25) comme unité, et des moyens pour corriger lesdites caractéristiques. graphiques, moyennant quoi ladite caractéristique graphique de phase reste non modifiée et ladite caractéristique graphique de magnitude est traitée au-delà de l'unité pour être une ligne droite projetée à travers zéro et l'unité.

6. Appareil selon la revendication 5, dans lequel ledit appareil comprend en outre un générateur de pré-distorsion statique (48) qui est agencé pour avoir une fonction inverse de phase et de magnitude dudit modèle d'envoi (42), un autre normalisateur pour normaliser les caractéristiques de phase et de magnitude dudit générateur de pré-distorsion statique (48) pour représenter un point de saturation dudit amplificateur de puissance (25) comme unité, un autre correcteur pour corriger lesdites caractéristiques graphiques du générateur de pré-distorsion statique (48) moyennant quoi ladite caractéristique graphique de phase dudit générateur de pré-distorsion statique (48) est traitée au-delà de l'unité pour être une phase constante, et ladite caractéristique graphique de magnitude dudit générateur de pré-distorsion (48) est traitée au-delà de l'unité pour être une ligne droit projetée pour passer par zéro et l'unité.
